# EUROPÄISCHE PATENTANMELDUNG

(11) **EP 4 763 340 A1**
(43) Veröffentlichungstag der Anmeldung: **24.06.2026**
(21) Anmeldenummer: 25213217.0
(22) Anmeldetag: 04.11.2025
(51) Int. Cl.: B03B 5/02, B07B 1/00, C04B 20/02, C04B 33/04, C04B 33/132

(54) **VERFAHREN ZUR AUFBEREITUNG VON QUARZ AUS TAUBEM GESTEIN SOWIE VERWENDUNG VON AUS TAUBEM GESTEIN GEWONNENEM QUARZ**

(30) Priorität: 19.12.2024 DE 102024139039; 30.04.2025 DE 102025116631
(71) Anmelder: Asmanit-Dorfner GmbH & Co. Mineralaufbereitungs-KG, 92242 Hirschau (DE)
(72) Erfinder:
(74) Vertreter: Hannke Bittner & Partner mbB Regensburg

(57) **Zusammenfassung**

Die vorliegende Erfindung betrifft ein Verfahren zur Gewinnung von Quarz aus bei der Gewinnung eines Tonminerals aus einem Rohmaterial anfallenden Rückständen. Das Verfahren umfasst die Schritte
- Abbau eines quarz- und tonmineralhaltigen Rohmaterials aus einer Lagerstätte,
- Transport des Quarzes zusammen mit dem Tonmineral zu einer Aufbereitungseinrichtung,
- hydromechanische Trennung von Quarz und Tonmineral,
- Aufarbeitung des Tonminerals, und
- Aufbereitung des Quarzes aus dem bei der Aufarbeitung des Tonminerals verbleibenden Restmaterials, wobei diese Aufbereitung mindestens einen Schritt zur Abtrennung eines organischen Feststoffs und eine Klassierung des Quarzes umfasst.

Außerdem betrifft die Erfindung die Verwendung eines nach diesem Verfahren erhaltenen Quarzes.

## Beschreibung

Die vorliegende Erfindung betrifft ein Verfahren zur Aufbereitung von Quarz aus taubem Gestein oder Gangart sowie Verwendung von aus taubem Gestein oder Gangart gewonnenem Quarz.

Quarz, insbesondere in Form von Quarzsanden, wird weltweit in großen Mengen für verschiedenste Anwendungen in der Industrie, Freizeit und Bauwesen genutzt. Im Jahr 2013 betrug die weltweite Förderung 142 Mio. Tonnen. Auch in Deutschland besteht großer Bedarf an (reinem) Quarzsand. Im Jahr 2014 betrug dort die Fördermenge nach Angaben des Bundesverbandes Mineralische Rohstoffe 10,4 Mio. Tonnen.

Quarzsand wird überwiegend durch Abbau von geologisch relativ jungen oder sehr jungen Lockersedimenten gewonnen. Oftmals wird Quarzsand mittels Saugbagger aus Gewässern gewonnen.

Anwendung findet Quarz beispielsweise in der Glas- oder Keramikherstellung, der Produktion von Silizium oder der chemischen Umsetzung beispielsweise zu Wasserglas. Weitere wichtige Anwendungen für Quarzsande sind in der (Trink-) Wasserindustrie (beispielsweise als Filterkies), in der Bauchemie (beispielsweise in Trockenmörtel, Trockenbeton, Vergussmörtel und andere Spezialmörtel), als Füllstoffe (beispielsweise für die Farben- und Lackherstellung sowie die Kunststoffindustrie), als Freizeitsande (beispielsweise für Reitplätze, Golfplätze, Kunstrasenplätze, Beach-Volleyballfelder), als Streumittel (zur Reduzierung der Rutschgefahr oder als Bremssand), in Feuerfestanwendungen (beispielsweise als Formkörper für die Gießereiindustrie, Speiser oder Schiebersande), als Schleifmittel ("beispielsweise "Sandpapier"), sowie der Glas-, Keramik- und Emaille-Herstellung

Auch wenn Quarzsand weit verbreitet ist und weltweit in nahezu unbegrenzter Menge zur Verfügung steht, wird Sand aufgrund seiner in den verschiedenen Lagerstätten unterschiedlichen Eigenschaften (chemische Zusammensetzung, insbesondere (metallische) Verunreinigungen, Korngrößenverteilung und Kornform) in großen Mengen transportiert. Ein bekanntes und plakatives Beispiel für den weltweiten Transport von Sand ist, dass Sand auch in Wüstenregionen geliefert wird, da die dort verfügbaren Sande für bestimmte Anwendungen nicht geeignet sind. So ist beispielsweise der im Sahararaum meist vorkommende Sand nicht zur Aufbereitung von Wasser geeignet, da er einen geringen SiOₓ-Anteil aufweist, was in einer geringen Härte resultiert, und er aufgrund der runden Kornform kaum Filterwirkung gewährleistet (Verkauf von "Sand in die Sahara").

Der mit einem solchen Transport verbundene Aufwand macht Sand teuer und verursacht Emissionen, beispielsweise CO₂-Ausstoß. Aufgrund des hohen spezifischen Gewichts von Quarzsand sowie dessen hoher Schüttdichte ist meist schweres Gerät notwendig, so dass die (CO₂-) Emissionen signifikant sind. Es besteht daher der Bedarf, auch bislang ungenutzte Materialien für die oben genannten Anwendungen nutzbar zu machen, insbesondere auch Materialien, die in räumlicher Nähe zu der vorgesehenen Nutzung verfügbar sind, bislang aber nicht nutzbar waren.

Eine Lösung dieser Aufgabe besteht in der Nutzbarmachung von taubem Gestein oder Gangart nach Patentanspruch 1. Eine Lösung besteht nämlich in einem Verfahren zur Gewinnung von Quarz aus bei der Gewinnung eines Tonminerals aus einem Rohmaterial anfallenden Rückständen und dem Recycling dieser. Dieses zeichnet sich durch die Schritte aus:
- Abbau eines quarz- und tonmineralhaltigen Rohmaterials aus einer Lagerstätte,
- Transport des Quarzes zusammen mit dem Tonmineral zu einer Aufbereitungseinrichtung,
- hydromechanische Trennung von Quarz und Tonmineral,
- Aufbereitung des Tonminerals, und
- Aufbereitung des Quarzes aus einem bei der Aufbereitung des Tonminerals verbleibenden Restmaterial, wobei diese Aufbereitung mindestens einen Schritt zur Abtrennung eines organischen Feststoffs und eine Klassierung des Quarzes umfasst.

Die vorliegende Erfindung wird am Beispiel von Kaolin dargelegt, ist aber auf alle oder zumindest eine Vielzahl von anderen Mineralen anwendbar bzw. übertragbar.

Taubes Gestein und Gangart fällt im Bergbau beziehungsweise der Isolierung nutzbarer Erze und Mineralien aus dem abgebauten Gestein in großen Mengen an.

Als taubes Gestein wird in der Bergmannssprache nicht verwertbares Gestein bezeichnet. Dieses fällt beim Abbau von (beispielsweise) Erzlagerstätten oder Mineralienlagerstätten an. Der mit der Gewinnung der hochwertigen Erze oder Mineralien einhergehende Abbau des tauben Gesteins lässt sich nicht vermeiden. Durch den Abbau des tauben Gesteins kann ein Zugang zu einer Erzlagerstätte oder Mineralienlagerstätte überhaupt erst möglich gemacht werden. Außerdem sind oftmals (insbesondere beim Untertageabbau) für den Bergwerksbetrieb zahlreiche Schächte nötig, um zu den Erzadern und Mineralienlagerstätten vordringen zu können. Ebenso ist oftmals taubes Gestein in die Erzadern oder die mineralienführenden Schichten eingelagert, welches abgetrennt werden muss.

Von taubem Gestein unterschieden wird Gangart. Als Gangart werden Minerale und Gesteinsfragmente bezeichnet, die gemeinsam mit dem Nutzmaterial, also dem Träger der jeweils abbauwürdigen Wertstoffe, beispielsweise einem Eisenerz, abgebaut werden, aber üblicherweise als wertlos betrachtet werden, da deren weitere Aufarbeitung meist nicht rentabel ist. Typische Gangartminerale sind Quarz, Calcit, Dolomit, Ankerit, Feldspäte und Glimmer. Die Gangart selbst ist meist Teil des Erzes, da die Gangartminerale meistens mit den Erzmineralen verwachsen vorliegen. Eine Trennung der abbauwürdigen Wertstoffe, beispielsweise der Erzminerale, von den Gangartmineralen erfolgt meist über Tage, aber oft noch in unmittelbarer Nähe zum Abbauort in entsprechenden (Erz-) Aufbereitungsanlagen. Die Gangart wird deponiert oder zum Verfüllen von Stollen genutzt.

Im Rahmen dieser Erfindung wird ebenfalls zwischen taubem Gestein und Gangart unterschieden, jedoch lassen sich die Verfahren und Nutzungen sowohl für taubes Gestein als auch für Gangart analog anwenden. Daher sollen im Rahmen dieser Erfindung alle Offenbarungen für taubes Gestein auch als entsprechende Offenbarung für Gangart verstanden werden, sofern nicht explizit auf andere Behandlungen oder Anwendungen hingewiesen wird. Ebenso soll im Rahmen dieser Erfindung alle Offenbarungen für Gangart auch als entsprechende Offenbarung für taubes Gestein verstanden werden.

Wie im Folgenden lediglich exemplarisch am Beispiel Kaolin dargelegt ist, kann im Wesentlichen zwischen zwei verschiedenen Kaolinlagerstättentypen unterschieden werden. Dabei handelt es sich um primäre Vorkommen und sekundäre Vorkommen.

Die primären Vorkommen können weiter in hydrothermale Lagerstätten und Residuallagerstätten unterschieden werden. Granite oder Rhyolite werden vor Ort, also *in situ* durch Oberflächenwasser, fließendes Grundwasser oder hydrothermale Fluide chemisch verwittert. Derartige Vorkommen werden den hydrothermalen Lagerstätten zugeordnet.

Sekundäre Kaoline sind zumeist umgelagerte primäre Kaoline. Am Ort der Entstehung wurden sie erodiert, anschließend transportiert und gemeinsam mit anderem Material in Form von Linsen abgelagert. Manche sekundären Kaolinite entstanden durch hydrothermale Alteration, also chemische Verwitterung durch Grundwasser, von Arkosen. Als Arkose wird ein Sediment mit einem Feldspatanteil von mehr als 25 % bezeichnet.

Großen Kaolinlagerstäten befinden sich in Brasilien, in den USA, Deutschland, Frankreich, England, Tschechien, Japan, China, Indien und auf den Philippinen. Die meisten dieser Lagerstätten wie beispielsweise die großen Lagerstätten in Cornwall (UK) sind im Aufbau den primären Lagerstätten zuzuordnen. Der Kaolinanteil im Rohmaterial liegt im Wesentlichen in einem Bereich 10 - 30 Ma-%. In derartigen Lagerstätten ist es üblich, aus dem Rohmaterial den Kaolin mittels sogenannter Monitore, das sind Wasserstrahlgeräte, herauszuwaschen. Der Kaolin wird durch die Monitore bereits in der Lagerstätte von den meist wesentlich härteren Reststoffen getrennt. Die durch den Wassereintrag gebildete Kaolinsuspension wird dann abgeführt und weiterverarbeitet, insbesondere weiter aufgereinigt. Die bei dieser Behandlung nicht aufgeschlämmten Reststoffe verbleiben ungenutzt in der Lagerstätte und haben keinerlei Funktion oder Nutzen. Insbesondere aufgrund des weiterhin hohen Wasseranteils ist die Handhabung und Weiterbehandlung erschwert.

Der oben beschriebene Prozess ist beispielsweise beschrieben in Charles Thurlow: "CHINA CLAY from Cornwall & Devon An illustrated account of the modern China Clay Industry" (3rd Edition (2001); Cornish Hillside Publications, St Austell, Cornwall; ISBN I 900 147 23 8. Diese Veröffentlichung enthält auch historische Fotos, die Monitore zeigen, mit denen Kaolin aus dem Rohmaterial herausgeschlämmt wird.

Nachteilig bei diesem Verfahren ist, dass am Ort des Abbaus große Mengen Wasser benötigt werden. Sofern keine natürliche Wasserquelle vor Ort vorhanden ist, muss ein entsprechendes Zuleitungssystem installiert werden. In jedem Fall muss bei diesem Verfahren jedoch das verwendete Wasser mit den aufgeschlämmten Bestandteilen aufgearbeitet werden. Ein entsprechendes Leitungssystem ist daher notwendig. **In** vielen Fällen ist die fachgerechte Entsorgung des genutzten Wassers schwierig.

Auch die Entsorgung der nicht aufgeschlämmten Bestandteile gestaltet sich schwierig. Aufgrund der hohen Feuchtigkeit sind die Reststoffe schwer und lassen sich nicht einfach handhaben. Es ist schweres Gerät notwendig, was jedoch in dem bei diesem Verfahren aufgrund des versprühten Wassers zwangsläufig feuchten Umgebungsbedingungen ebenfalls mit Problemen verbunden ist. Die Nutzung des tauben Materials, beispielsweise zum Verfüllen, ist daher auch nur beschränkt möglich.

Da bei diesem Verfahren unmittelbar mit dem Abbau auch eine Trennung zwischen Kaolin und Reststoffen erfolgt, ist meist nicht zwischen taubem Material und Gangart zu unterscheiden. Deshalb werden wie oben dargelegt diese beiden Begriffe synonym verwendet, sofern nichts anderes angegeben ist, auch wenn es sich bei dem Nutzmaterial, beispielsweise dem Tonmineral nicht um Kaolin handelt und es nicht mittels der oben beschriebenen Aufschlämmung abgebaut bzw. (vor-) gereinigt oder angereichert wird.

Im Gegensatz zu diesem aus dem Stand der Technik bekannten Verfahren wird bei dem Verfahren gemäß der vorliegenden Erfindung bevorzugt das Rohmaterial als Ganzes abgebaut und bevorzugt selektiv, also abhängig von der chemisch-mineralogischen Zusammensetzung, insbesondere abhängig vom Feldspatgehalt einer hydromechanischen Trennung (auch als nassmechanische Aufbereitung bezeichnet) zugeführt.

Es hat sich gezeigt, dass insbesondere im Rohmaterial enthaltener Quarz dazu geeignet ist, den im Rohmaterial enthaltenden Kaolin förderbar und transportierfähig zu machen. Das vorgeschlagene Verfahren eignet sich daher insbesondere für Rohmaterialien mit einem hohen Quarzanteil von beispielsweise ≥ 15 Gewichtsprozent, bevorzugt ≥ 20 Gewichtsprozent, weiter bevorzugt ≥ 25 Gewichtsprozent, mehr bevorzugt ≥ 30 Gewichtsprozent, insbesondere bevorzugt ≥ 40 Gewichtsprozent, meist bevorzugt≥ 50 Gewichtsprozent.

Vorzugsweise erfolgt vor der hydromechanischen Trennung eine Klassierung des quarzhaltigen Rohmaterials nach dessen chemisch-mineralogischer Zusammensetzung. Dadurch ist es möglich die Aufarbeitung gemäß der chemisch-mineralogischer Zusammensetzung anzupassen und so besonders genau auf die Erfordernisse zur Trennung einstellen zu können. Insbesondere kann dadurch die Trennung besonders ressourcenschonend und damit auch kostengünstig erfolgen. Es hat sich überraschenderweise gezeigt, dass es insbesondere bevorzugt ist, das quarzhaltige Rohmaterial nach dessen Quarzanteil zu klassifizieren. Da der Quarzanteil für die Art der Aufarbeitung und insbesondere die hydromechanische Trennung einen größeren oder zumindest genauso großen Einfluss zu haben scheint wie der Anteil des Tonminerals, ist auf Basis des Quarzanteil eine besonders ressourcenschonende Auswahl der Aufarbeitungsbedingungen möglich.

Bevorzugt wird das tonmineralhaltige, beispielsweise kaolinhaltige Rohmaterial nach dem (selektiven) Abbau des Rohmaterials zunächst sortenspezifisch gelagert. Damit liegt ein wesentlicher Unterschied zu dem oben beschriebenen Verfahren des Ausschlämmens des Kaolins mittels Monitore (im Folgenden auch als "Monitoring" bezeichnet) vor. Beim Monitoring wird der Kaolin aus jeglichem Rohmaterial herausgeschlemmt und der gesamte Kaolin unabhängig von der Kaolinqualität und/oder dem Rohmaterial unspezifisch zusammengeführt.

Vorzugsweise werden bei einer Variante des erfindungsgemäßen Verfahrens nach der Förderung des Rohmaterials (bevorzugt rohmaterialspezifische) Haufwerke gebildet. Dadurch ist es möglich, die verschiedenen (Kaolin-) Qualitäten nicht nur selektiv, sondern diese auch über einen langen Zeitraum zu halden. Demgegenüber muss beim aus dem Stand der Technik bekannten Monitoring die Suspensionen schnell verarbeitet werden und kann nicht bzw. nur mit großem Aufwand gelagert werden. Bei dieser Variante des erfindungsgemäßen Verfahrens hat der Quarz die Funktion, dass er das Tonmineral, bzw. den Kaolin in einem lagerfähigen Zustand hält. Dadurch wird das Tonmineral, bzw. der Kaolin über einen langen Zeitraum verfügbar.

Bevorzugt wird erst nach dem Halden das Rohmaterial einer hydromechanischen Aufbereitung zugeführt. Das Tonmineral, bzw. der Kaolin als wesentlicher Wertstoff wird dabei von übrigen Bestandteilen des Rohmaterials getrennt und (damit) weiter veredelt.

Bevorzugt erfolgt nach der (zumindest teilweisen) Abtrennung des Tonminerals eine Lagerung des quarzhaltigen Restmaterials unter Witterungseinfluss. Dies hat sich als besonders vorteilhaft erwiesen, da so eine "Alterung" des Restmaterials erfolgen kann, welche die anschließende Aufarbeitung des Restmaterials zur Gewinnung von Quarz begünstigt. Bevorzugt erfolgt die Lagerung über mindestens einen Tag, bevorzugt mindestens 3 Tage, weiter bevorzugt mindestens 5 Tage, weiter bevorzugt mindestens 7 Tage, weiter bevorzugt mindestens 2 Wochen. Die Dauer der Lagerung kann den jeweils herrschenden Witterungsbedingungen angepasst werden. Es hat sich gezeigt, dass eine längere Lagerung dazu führt, dass zuvor nicht aufbereitbares Tonmineral von dem Restmaterial trennbar wird. Es wird vermutet, dass das Tonmineral bei der hydromechanischen Aufbereitung in Kavitäten des bisher als Gangart bzw. als taubes Material eingestuften Restmaterials verbleibt und erst nach der Bewitterung von diesem trennbar wird.

Dabei hat sich als besonders bevorzugt erwiesen, wenn die Lagerung des quarzhaltigen Restmaterials zumindest zeitweise bei ≤ 5°C, bevorzugt ≤ 2°C, weiter bevorzugt ≤ 0°C, mehr bevorzugt ≤ -2°C, besonders bevorzugt ≤ -5°C erfolgt. Es wird vermutet, dass Restwasser, welches bei der hydromechanischen Aufbereitung in Kavitäten des bisher als Gangart bzw. als taubes Material eingestuften Restmaterials eindringt, während der Bewitterung dort ebenfalls befindliches Tonmineral löst und so gewinnbar macht. Als besonders effizient hat sich erwiesen, wenn das in die Kavitäten eingedrungene Restwasser zu Eiskristallen kristallisiert und sich dabei ausdehnt. Da die Ausdehnung des Wassers jedoch schon oberhalb von 0 °C einsetzt, ist eine Behandlung mit Temperaturen unter 0 °C nicht zwingend erforderlich. Es hat sich jedoch gezeigt, dass bei tieferen Temperaturen der gewünschte Effekt schneller eintritt und die Lagerung bei dieser Temperatur daher weniger lange dauern muss. Tiefere Temperaturen haben sich jedoch auch bei längerer Lagerung als vorteilhaft erwiesen, da so dabei das Restmaterial insgesamt durchfrieren kann und so auch in tiefen Kavitäten eine ausreichend niedrige Temperatur herrscht, um den gewünschten Effekt auszulösen.

Zurückgeführt werden kann der oben beschriebene Effekt wahrscheinlich auf die bei der Ausdehnung des Wassers bei tiefen Temperaturen auftretende Volumenzunahme. Diese führt wahrscheinlich zum "Heraussprengen" des Tonminerals, so dass dieses von dem tauben Material trennbar wird. Eine erneute hydromechanischen Aufbereitung kann daher das im Restmaterial verbliebene Tonmineral herauslösen und gewinnbar machen.

Bevorzugt zeichnet sich eine Verfahrensvariante daher dadurch aus, dass bei der Aufbereitung des Quarzes eine weitere Trennung zwischen Quarz und Tonmineral erfolgt, wobei diese weitere Trennung bevorzugt ebenfalls eine hydromechanische Trennung umfasst. Selbstverständlich können auch andere Methoden der Trennung ergänzend oder alternativ dazu verwendet werden. Durch andere Methoden können beispielsweise vom Tonmineral verschiedene Materialien abgetrennt werden. Eine der denkbaren anderen Methoden ist die oben bereits erwähnte Abtrennung eines organischen Feststoffs, welche beispielsweise durch Siebung und/oder Sedimentation erfolgen kann.

Die Aufbereitung des Quarzes erfolgt bevorzugt unter Ausnutzung von Reststoffen oder einer Energieform, die bei der Aufarbeitung des Tonminerals anfällt. Dadurch kann gewährleistet werden, dass die Aufbereitung des Quarzes besonders ressourcenschonend erfolgen kann.

So ist bevorzugt, dass für die Aufbereitung des Quarzes eine Flüssigkeit verwendet wird, die bei der hydromechanischen Trennung von Quarz und Tonmineral anfällt. Beispielsweise kann es sich dabei um ein Abwasser handeln, welches bei der hydromechanischen Trennung genutzt wird, um beispielsweise das Tonmineral von dem tauben Material zu trennen und/oder das Tonmineral zu transportieren. Bevorzugt wird die Flüssigkeit vor der Aufbereitung des Quarzes aufbereitet. Die Aufbereitung kann beispielsweise eine Reinigung, insbesondere die Trennung oder zumindest eine Abreicherung des Tonminerals aus der Flüssigkeit umfassen.

Alternativ oder ergänzend dazu ist bevorzugt, dass für die Aufbereitung des Quarzes Abwärme aus einem Aufarbeitungsprozess des Tonminerals verwendet wird. Beispielsweise kann die Aufbereitung des Quarzes eine Veredelung umfassen, bei welcher es sich beispielsweise um eine Trocknung und/oder Klassierung handeln kann. Zur Trocknung wird bevorzugt Abwärme aus der des Tonmineralaufbereitung (beispielsweise bei einer Kaolinaufarbeitung dessen Kalzinierung) genutzt. Auch andere Prozesse, die thermische Energie erfordern, könnten Abwärme aus der Tonmineralaufbereitung nutzen. Bevorzugt kann daher die Aufbereitung des Quarzes CO₂-neutral erfolgen.

Bevorzugt wird derjenige Anteil des Quarzes aus der erfindungsgemäßen (zweiten) Aufbereitung, der nicht unmittelbar der weiteren Veredelung zugeführt werden kann, als lagerfeuchter Sand auf Halden gelagert. Aufgrund der Eigenschaften des bei diesem Verfahren vorliegenden (beispielsweise partikulärem und beispielsweise kantengerundetem) Quarzes kann der Quarz unmittelbar am Ort der Aufbereitung genutzt werden, beispielsweise zur Böschungssicherung und/oder als Lärmschutzwall.

Neben den oben beschrieben (Primär-) Nutzungen könnte das taube Material, bzw. ein solcher Sand beispielsweise auch genutzt werden für eine (Primär-) Anwendung ausgewählt aus einer Gruppe, die eine Nutzung als
- Spielplatzsand,
- Volleyballsand,
- Reitplatzsand,
- Wärmespeicher,
- Streusand,
- Sandsackfüllung für den Hochwasserschutz und optional weitere.

Diese (Primär-) Anwendungen haben sich als besonders vorteilhaft erwiesen, da während dieser Primärnutzung eine Bewitterung und/oder Temperaturänderungen auftritt/auftreten, die - wie oben dargestellt - besonders vorteilhaft für eine erneute Abtrennung von Tonmineral aus dem Restmaterial der ersten Tonmineralabtrennung ist/sind.

Bevorzugt zeichnet sich ein solcher primär aufbereiteter Quarz (-sand) durch folgende Eigenschaften aus:

| | Einheit | Spanne | bevorzugt | Meist bevorzugt |
|---|---|---|---|---|
| Korngrößenverteilung | mm | 0,001-10 | 0,01-5 | 0,1-3 |
| Quarzanteil | Ma-% | >50 | >75 | >90 |
| Fremdmineralanteil | Ma-% | <50 | <25 | <10 |
| Gehalt an Fe₂O₃ | Ma-% | <1 | <0,5 | <0,1 |
| Kornform | | unspezifisch | kantengerundet | überwiegend rund |

Wie oben dargelegt, ist dieses Verfahren nicht auf kaolinhaltige Rohmaterialien beschränkt. Das oben Beschriebene lässt sich auch auf Verfahren zur Gewinnung anderer Minerale und Erze übertragen, die als ähnliches Haldenmaterial anfallen, oder als taubes Gestein oder als Ausschuss. Es muss dabei auch nicht zwangsläufig Quarz der dominierende Anteil bzw. Mineral sein. Auch z.B. feldspathaltige Materialien, z.B. Flusssande oder auch andere Feldspat-Nebenprodukte sind potenziell geeignet. Daher sollen im Rahmen dieser Erfindung die Begriffe "Quarz" und "Sand" als synonyme verstanden werden, sofern nicht explizit etwas anderes definiert ist. Als "Feldspat" sollen entsprechend generell die Minerale der Feldspatgruppe verstanden werden, sofern nicht explizit auf ein bestimmtes Mineral der Feldspatgruppe abgestellt ist, sollen unter "Feldspat" somit insbesondere Silikate mit der allgemeinen chemischen Zusammensetzung (Ba,Ca,Na,K,NH₄,Sr)(Al,Fe³⁺,B,Si)₄O₈ verstanden werden. (Quarz-) Sande aus derartigen Prozessen zeichnen sich bevorzugt durch eine oder mehrere der folgenden Eigenschaften aus:

| | Einheit | Spanne | bevorzugt | Meist bevorzugt |
|---|---|---|---|---|
| Korngrößenverteilung | mm | 0,001-10 | 0,01-5 | 0,1-3 |
| Hauptanteil | Ma-% | >20 | >50 | >75 |
| Fremdmineralanteil | Ma-% | <80 | <50 | <25 |
| Gehalt an Fe₂O₃ | Ma-% | <1 | <0,5 | <0,1 |
| Kornform | | unspezifisch | kantengerundet | überwiegend rund |

Bevorzugt wird als Rohmaterial ein Abbauprodukt mit einen Quarzanteil von ≥ 15 Gewichtsprozent, bevorzugt ≥ 20 Gewichtsprozent, weiter bevorzugt ≥ 25 Gewichtsprozent, mehr bevorzugt ≥ 30 Gewichtsprozent, insbesondere bevorzugt ≥ 40 Gewichtsprozent, meist bevorzugt≥ 50 Gewichtsprozent eingesetzt. Rohstoffe mit einem derart hohen Quarzanteil werden im Stand der Technik üblicherweise gemieden, da dessen Handhabung aufgrund des hohen Volumens und des hohen spezifischen Gewichts des Quarzes vergleichsweise aufwendig und kostenintensiv ist.

Der (zwischengelagerte und/oder wie oben beschrieben vorgenutzte) (Quarz-) Sand kann danach, beispielsweise nach der Nutzung als Böschungssicherung oder Lärmschutzwall, weiterverwendet, also recycliert werden.

All den nach dem oben beschriebenen Verfahren erhaltenen (Quarz-) Sandvarianten ist gemeinsam, dass sie als taubes Material der Tonmineralgewinnung anfallen und daher nicht separat gefördert werden müssen. Das Fördern des (Quarz-) Sandes erfolgt somit vorzugsweise ohne zusätzliche CO₂ Emission. Ebenso kann die Aufbereitung des (Quarz-) Sandes am Ort dessen Förderung und/oder der Aufarbeitung des Tonminerals erfolgen, so dass auch kein (langer) Transport notwendig ist und/oder die Fracht CO₂-neutral erfolgen kann. Wie oben dargelegt wird auch zur Aufbereitung Energie und/oder Reste aus der Tonmineral Aufarbeitung genutzt, so dass auch dabei nicht zusätzlich CO₂ freigesetzt wird oder die CO₂-Emission zumindest drastisch verringert ist.

Wie oben erwähnt, kann der Sand für eine weitere Verwendung getrocknet und/oder klassiert werden. Besonders bevorzugt erfolgt eine Trocknung und/oder Klassierung (beispielsweise durch Sieben) nachdem das bei der Aufbereitung des Tonminerals verbleibende Restmaterial erneut mittels einem hydromechanischen Verfahrens aufbereitet und gereinigt wurde. Weiter optional kann dieser getrocknete und/oder klassierte Sand einem oder mehreren weiteren Veredlungsprozessen zugeführt werden.

Bevorzugt wird der bei der Aufbereitung erhaltene Quarz mindestens einem Veredlungsprozess zugeführt, der ausgewählt ist aus einer Gruppe, die Mischen mit mindestens einer anderen Fraktion Quarz, Mischen mit mindestens einem anderen Material, Mischen mit mindestens einem Additiv, Beschichten mit mindestens einem Polymer, Beschichten mit mindestens einer Farbe, Beschichten mit mindestens einem Pigment, Beschichten mit mindestens einer funktioneller Beschichtung, Beschichten mit mindestens einem Bindemittel, Mischen mit einem (ggf. beschichteten) Sand, Brennen des Quarzes, Brennen einer Fraktion des Quarzes und Brennen mehrerer Fraktionen des Quarzes umfasst. Dadurch ist es möglich, dem erhaltenen Quarz gewünschte Eigenschaften zu verleihen und/oder eine Zusammensetzung mit gewünschten Eigenschaften zu erzeugen.

Es hat sich gezeigt, dass es in einigen Fällen vorteilhaft ist, dem bei der Aufarbeitung des Tonminerals verbleibenden Restmaterials (Quarz-) Sand aus einer anderen Quelle zuzusetzen, um den Quarzanteil zu erhöhen. Dementsprechend kann ein Sand, der für eine weitere Verwendung aufbereitet wird, auch teilweise aus einer anderen Quelle als der Tonmineralgewinnung stammen. Als besonders geeignet haben sich Sande erwiesen, die bereits zuvor genutzt wurden als Spielplatzsand, (Beach-) Volleyballsand, Reitplatzsand, Baumaterial, Gießereisand, Filtersand (beispielsweise zur Wasseraufbereitung), Wärmespeicher, Streusand, oder Sandsackfüllung für den Hochwasserschutz.

Diese Sande sind oftmals aufgrund ihrer vorherigen Verwendung nicht als Rohstoff geeignet und erfordern daher eine Aufbereitung. Werden sie jedoch als optionale zusätzliche Quarzquelle in dem erfindungsgemäßen Verfahren eingesetzt, kann die Aufbereitung besonders effektiv und ressourcenschonend erfolgen. Insbesondere aufgrund der Tatsache, dass viele der oben genannten Sande organische Verunreinigungen enthalten, die gemeinsam mit den organischen Feststoffen, die bei der Aufarbeitung des Tonminerals im Restmaterial verbleiben, abgetrennt werden können. Zusätzlicher apparativer oder energetischer Aufwand ist daher nicht notwendig oder ist vergleichsweise gering. Darüber hinaus hat sich gezeigt, dass Sande aus den oben genannten Quellen bereits selbst oder gegebenenfalls in Mischung mit einem anderen Sand aus der oben genannten Gruppe und/oder dem aus den Reststoffen der Tonmineralgewinnung gewinnbaren Sand besonders gut für die weitere Verwendung geeignet sind. Insbesondere entstammt jedoch mindestens ein Sand einem Verfahren zur Kaolin- und/oder Tonmineralgewinnung.

Sollte eine Veredelung des so erhaltenen Sandes notwendig oder für bestimmte Anwendungen gewünscht sein, ist bevorzugt ein (ggf. weiterer) Veredlungsprozess oder mehrere Veredlungsprozesse vorteilhaft. Ein solcher Veredelungsprozess ist bevorzugt ebenfalls ausgewählt aus der Gruppe, der oben genannten Veredlungsprozesse.

Die dabei erhaltenen (Quarz-) Sande haben sich als besonders geeignet gezeigt, für eine Anwendung, die ausgewählt ist aus einer Gruppe, die
- die Herstellung von Verbundwerkstoffen, Küchenspülen, Arbeitsplatten (in all diesen Anwendungen bevorzugt in Form eines Füllstoffs),
- die Herstellung von Sanitärmaterialien, Polyesterspülen, Duschtassen, Waschbecken (in all diesen Anwendungen bevorzugt in Form eines Füllstoffs),
- Verwendung als ein Baumaterial,
- Verwendung in einem Pflasterfugenmörtel,
- Verwendung als ein Bauchemie-Bestandteil,
- Verwendung als ein Gießereisand, und
- Verwendung als ein Drainagesand,
umfasst.

Dementsprechend besteht eine weitere Lösung der oben genannten Aufgabe in einer Verwendung eines nach einem wie oben beschriebenen Verfahren erhaltenen Quarzes in einer Anwendung, die ausgewählt ist aus einer Gruppe, die einen Verbundwerkstoffs (bevorzugt als Füllstoff), eine Küchenspüle (bevorzugt als Füllstoff), eine Arbeitsplatten (bevorzugt als Füllstoff), ein Sanitärmaterial (bevorzugt als Füllstoff), eine Polyesterspüle (bevorzugt als Füllstoff), eine Duschtasse (bevorzugt als Füllstoff), ein Waschbecken (bevorzugt als Füllstoff), ein Baumaterial, einen Pflasterfugenmörtel, ein Bauchemie-Bestandteil, ein Gießereisand und einen Drainagesand umfasst.

Insbesondere hat sich jedoch die Verwendung von nach dem oben genannten Verfahren hergestellten Sanden in
- Verbundwerkstoffen, Küchenspülen, Arbeitsplatten (jeweils bevorzugt als Füllstoff),
- Sanitärmaterialien, Duschtassen, Waschbecken (jeweils bevorzugt als Füllstoff), und/oder
- in Kombination mit MMA / PMMA, Polyester oder anderen organischen Harzen / Bindemitteln
erwiesen.

Weitere Vorteile, Ziele und Eigenschaften der vorliegenden Erfindung werden anhand nachfolgender Beschreibung der anliegenden Figur erläutert.

In der Figur zeigt:

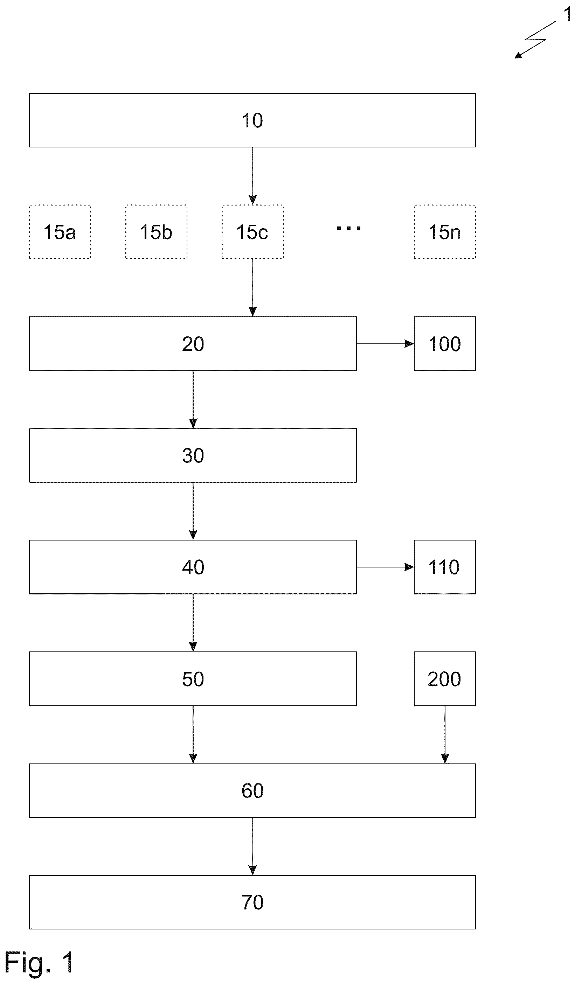

Fig. 1 eine schematische Darstellung eine Variante des erfindungsgemäßen Verfahrens.

Figur 1 zeigt ein Beispiel eines erfindungsgemäßen Verfahrens zur Gewinnung von Quarz. Dabei ist mit Bezugszeichen 10 der (selektive) Abbau des quarz- und tonmineralhaltigen Rohmaterials aus einer Lagerstätte und dessen Transport zu einer Aufbereitungseinrichtung gekennzeichnet. Nach dem Abbau 10 wäre auch eine optionale (beispielsweise sortenspezifische) Lagerung auf verschiedenen Halden (15a, 15b, 15c ... 15/n) denkbar. In der Aufbereitungseinrichtung wird in Schritt 20 das Tonmineral vom Quarz getrennt. Diese Trennung erfolgt hydromechanisch. Schritt 100 symbolisiert die anschließende Aufarbeitung des Tonminerals.

Der mit Bezugszeichen 30 gekennzeichnete Schritt symbolisiert optionale Schritte, die mit dem quarzhaltigen Restmaterials durchgeführt werden können und in bevorzugten Ausführungsformen des Verfahrens auch durchgeführt werden. So kann Schritt 30 eine Lagerung des quarzhaltigen Restmaterials unter Witterungseinfluss und/oder die Lagerung des quarzhaltige Restmaterials bei niedrigen Temperaturen umfassen.

Schritt 40 symbolisiert die Aufbereitung des Quarzes aus den bei der Aufarbeitung des Tonminerals verbleibenden Restmaterials. Dieser Aufbereitungsschritt umfasst mindestens die Abtrennung eines organischen Feststoffs, der hier symbolisch durch das Bezugszeichen 110 dargestellt ist.

Bezugszeichen 50 kennzeichnet einen Schritt der weiteren Behandlung des Quarzes. Die Weiterbehandlung schließt mindestens einen Schritt der Klassierung des Quarzes ein. Wie oben beschrieben ist, können jedoch weitere Veredlungsschritte vorgesehen sein, die jedoch in Figur 1 nicht explizit dargestellt sind.

Der mit dem Bezugszeichen 60 dargestellte Schritt kennzeichnet eine möglichen Veredelungsprozess des erhaltenen Quarzes. Dabei können dem Quarz weitere Materialien zugemischt oder auf den Quarz aufgetragen werden. Diese sind mit Bezugszeichen 200 gekennzeichnet. Dabei kann es sich beispielsweise um eine andere Quarzfraktion, ein Additiv, ein Polymer, ein Pigment, eine funktionale Beschichtung oder ein Bindemittel handeln.

Bezugszeichen 70 symbolisiert eine anschließende Verwendung des aufbereiteten und gegebenenfalls veredelten Quarzes. Diese Verwendung kann beispielsweise die Nutzung als ein Füllstoff in einem Verbundwerkstoff wie beispielsweise einer Küchenspüle, einer Arbeitsplatte, einer Duschtasse, einer Badewanne oder als ein Gießereisand oder Baumaterial sein.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Absätzen und/oder Figuren auch Merkmale beschrieben und/oder dargestellt wurden, welche für sich genommen vorteilhaft sein können. Der Fachmann erkennt unmittelbar, dass ein bestimmtes in einem Absatz beschriebenes oder in einer Figur gezeigtes Merkmal auch ohne die Übernahme weiterer Merkmale aus diesem Absatz und/oder dieser Figur vorteilhaft sein kann. Ferner erkennt der Fachmann, dass sich auch Vorteile durch eine Kombination mehrerer in einzelnen oder in unterschiedlichen Absätzen beschriebener Merkmale ergeben können.

## Patentansprüche

1. Verfahren zur Gewinnung von Quarz aus bei der Gewinnung eines Tonminerals aus einem Rohmaterial anfallenden Rückständen,
**gekennzeichnet durch die Schritte:**
Abbau eines quarz- und tonmineralhaltigen Rohmaterials aus einer Lagerstätte,
Transport des Quarzes zusammen mit dem Tonmineral zu einer Aufbereitungseinrichtung,
hydromechanische Trennung von Quarz und Tonmineral,
Aufarbeitung des Tonminerals, und
Aufbereitung des Quarzes aus dem bei der Aufarbeitung des Tonminerals verbleibenden Restmaterials, wobei diese Aufbereitung mindestens einen Schritt zur Abtrennung eines organischen Feststoffs und eine Klassierung des Quarzes umfasst.

2. Verfahren nach Anspruch 1,
**gekennzeichnet durch,**
vor der hydromechanischen Trennung eine Klassierung des quarzhaltigen Rohmaterials nach dessen chemisch-mineralogischer Zusammensetzung, bevorzugt nach dessen Quarzanteil erfolgt.

3. Verfahren nach Anspruch 1 oder 2,
**gekennzeichnet durch,**
eine Lagerung des quarzhaltigen Restmaterials unter Witterungseinfluss, wobei die Lagerung über mindestens einen Tag, bevorzugt mindestens 3 Tage, weiter bevorzugt mindestens 5 Tage, weiter bevorzugt mindestens 7 Tage, weiter bevorzugt mindestens 2 Wochen erfolgt.

4. Verfahren nach Anspruch 3,
**dadurch gekennzeichnet, dass**
die Lagerung des quarzhaltigen Restmaterials eine Lagerung zumindest zeitweise bei ≤ 5°C, bevorzugt ≤ 2°C, weiter bevorzugt ≤ 0°C, mehr bevorzugt ≤ -2°C, besonders bevorzugt ≤ -5°C erfolgt.

5. Verfahren nach einem der vorherigen Ansprüche,
**dadurch gekennzeichnet, dass**
für die Aufbereitung des Quarzes Abwärme aus einem Aufarbeitungsprozess des Tonminerals verwendet wird.

6. Verfahren nach einem der vorherigen Ansprüche,
**dadurch gekennzeichnet, dass**
für die Aufbereitung des Quarzes eine Flüssigkeit, insbesondere ein Abwasser, verwendet wird, die/das bei der hydromechanischen Trennung von Quarz und Tonmineral anfällt, wobei die Flüssigkeit bevorzugt vor der Aufbereitung des Quarzes aufbereitet wird.

7. Verfahren nach einem der vorherigen Ansprüche,
**dadurch gekennzeichnet, dass**
bei der Aufbereitung des Quarzes eine weitere Trennung zwischen Quarz und Tonmineral erfolgt, wobei diese weitere Trennung bevorzugt ebenfalls eine hydromechanische Trennung umfasst.

8. Verfahren nach einem der vorherigen Ansprüche,
**dadurch gekennzeichnet, dass**
als Rohmaterial ein Abbauprodukt mit einen Quarzanteil von ≥ 15 Gewichtsprozent, bevorzugt ≥ 20 Gewichtsprozent, weiter bevorzugt ≥ 25 Gewichtsprozent, mehr bevorzugt ≥ 30 Gewichtsprozent, insbesondere bevorzugt ≥ 40 Gewichtsprozent, meist bevorzugt≥ 50 Gewichtsprozent eingesetzt wird.

9. Verfahren nach einem der vorherigen Ansprüche,
**dadurch gekennzeichnet, dass**
der bei der Aufbereitung erhaltene Quarz mindestens einem Veredlungsprozess zugeführt wird, wobei mindestens ein Veredlungsprozess ausgewählt ist aus einer Gruppe, die Mischen mit mindestens einer anderen Fraktion Quarz, Mischen mit mindestens einem anderen Material, Mischen mit mindestens einem Additiv, Beschichten mit mindestens einem Polymer, Beschichten mit mindestens einer Farbe, Beschichten mit mindestens einem Pigment, Beschichten mit mindestens einer funktioneller Beschichtung, Beschichten mit mindestens einem Bindemittel, Mischen mit einem (ggf. beschichteten) Sand, Brennen des Quarzes, Brennen einer Fraktion des Quarzes und Brennen mehrerer Fraktionen des Quarzes umfasst.

10. Verwendung eines nach einem der Verfahren nach einem der vorherigen Ansprüche erhaltenen Quarzes in einer Anwendung, die ausgewählt ist aus einer Gruppe, die einen Verbundwerkstoffs (bevorzugt als Füllstoff), eine Küchenspüle (bevorzugt als Füllstoff), eine Arbeitsplatten (bevorzugt als Füllstoff), ein Sanitärmaterial (bevorzugt als Füllstoff), eine Polyesterspüle (bevorzugt als Füllstoff), eine Duschtasse (bevorzugt als Füllstoff), ein Waschbecken (bevorzugt als Füllstoff), ein Baumaterial, einen Pflasterfugenmörtel, ein Bauchemie-Bestandteil, ein Gießereisand und einen Drainagesand umfasst.
